Europäisches Patentamt

(19) European Patent Office

Office européen des brevets

(11) Veröffentlichungsnummer: **0 004 916**
**B1**

# (12) EUROPÄISCHE PATENTSCHRIFT

(45) Veröffentlichungstag der Patentschrift:
**16.09.81**

(51) Int. Cl.³: **B 60 K 41/16,** B 60 K 20/04

(21) Anmeldenummer: **79101048.1**

(22) Anmeldetag: **05.04.79**

(54) Pedalsteuerung für ein stufenlos einstellbares Getriebe eines Fahrzeuges.

(30) Priorität: **05.04.78 DE 2814741**

(43) Veröffentlichungstag der Anmeldung:
**31.10.79 Patentblatt 79/22**

(45) Bekanntmachung des Hinweises auf die Patenterteilung:
**16.09.81 Patentblatt 81/37**

(84) Benannte Vertragsstaaten:
**FR GB IT NL SE**

(56) Entgegenhaltungen:
**AT-B-303 540**
**DE-A-2 406 611**
**GB-A-1 171 227**
**US-A-3 952 512**
**US-A-3 943 712**
**US-A-4 067 426**

(73) Patentinhaber: **Linde Aktiengesellschaft,**
**Abraham-Lincoln-Strasse 21, D-6200 Wiesbaden (DE)**

(72) Erfinder: **Abels, Theodor, Goldregenweg 6,**
**D-8750 Aschaffenburg (DE)**
Erfinder: **Götz, Bernhard, Goldregenweg 36,**
**D-8750 Aschaffenburg (DE)**

(74) Vertreter: **Schaefer, Gerhard, Dr., Linde**
**Aktiengesellschaft Zentrale Patentabteilung,**
**D-8023 Höllriegelskreuth (DE)**

Pedalsteuerung für ein stufenlos einstellbares Getriebe eines Fahrzeuges

Die Erfindung betrifft eine Pedalsteuerung für ein stufenlos über eine Nullage, die dem Stillstand der Abtriebswelle zugeordnet ist, in beide Abtriebsdrehrichtungen verstellbares, vorzugsweise zwangsläufig übertragendes, insbesondere hydrostatisches Getriebe eines Fahrzeuges. Für solche Zwecke sind Pedalsteuerungen mit zwei zu gegenläufiger Bewegung gekuppelten Pedalen bekannt, die bei Schaltung des Getriebes auf Stillstand der Abtriebswelle in höhengleicher Lage nebeneinander liegen (DE-PS 1 030 694). Zu diesen Doppelpedalsteuerungen ist es auch schon bekannt, ein zusätzliches Bremspedal auf das Getriebe einwirken zu lassen (DE-PS 1 296 532). Solche Pedalsteuerungen der beiden genannten Arten haben sich als ungewöhnlich vorteilhaft erwiesen. Trotzdem wird gelegentlich der Wunsch geäussert, eine Steuerung mit nur einem Fahrpedal zu haben, damit Fahrer, die häufig zwischen Fahrzeugen, beispielsweise Staplern, mit dieser Steuerung und PKW oder LKW mit der normalen Steuerung hin und her wechseln, keine Anpassungsschwierigkeiten haben. Deshalb ist bereits ein Gestänge für eine Pedalsteuerung vorgeschlagen worden, durch das eine Steuerung mit den wesentlichen Elementen eine Doppelpedalsteuerung umgebaut werden kann in eine Einpedalsteuerung (DE-PS 2 406 611). Die bisher bekannte Steuerung dieser Art hat den Nachteil, dass gegenüber der Doppelpedalsteuerung beim Auswechseln erhebliche Änderungen vorgenommen werden müssen und das Gestänge der Einpedalsteuerung über den Bereich der Pedalerie und der zugeordneten Hebel hinausgeht und dass für die Betätigung, bei der eine Federspannung überwunden werden muss, erhebliche Handkräfte erforderlich sind. Zudem tritt durch die Reibung unter Federvorsprung erheblicher Verschleiss auf.

Der Erfindung liegt die Aufgabe zugrunde, eine Einpedalsteuerung derart zu verbessern, dass die genannten Nachteile nicht auftreten, die zum Umbau einer Doppelpedalsteuerung erforderlichen Änderungen nur im Bereich der Pedalgestänge auftreten und die Bedienung durch geringe Handkraft möglich ist und geringe Reibungskräfte beim Umschaltvorgang auftreten und die Sicherheit erhöht wird.

Diese Aufgabe wird bei einer Pedalsteuerung nach dem Oberbegriff (DE-A-2406 611) durch die im Kennzeichen des Anspruchs 1 angegebenen Merkmale gelöst. Diese Lösung ermöglicht, zum Bedienen nur einen kleinen Elektrohandschalter zu betätigen, und durch die Art der Schaltung wird eine Vorwahl derart ermöglicht, dass während des Fahrens in eine Richtung der Handhebel in die andere Richtung umgeschaltet und damit diese als neue Fahrtrichtung vorgewählt werden kann, wobei jedoch das Umschalten an dem Pedalgestänge erst dann erfolgt, wenn das Gestänge seine Neutrallage erreicht hat.

Durch die Weiterausgestaltung gemäss Anspruch 2 wird eine einfache Lösung, die einen einfachen Umbau der normalen Doppelpedalsteuerung ermöglicht, erzielt, die zudem durch die robuste Gestaltung mit Klauenkupplungen auch im Dauerbetrieb keinen Verschleiss erwarten lässt.

Die Ausgestaltung und Schaltung gemäss Anspruch 3 ermöglicht die Drehsinnvorwahl bzw. damit Fahrtrichtungsvorwahl, wobei durch diese Schaltung in einfacher Weise gesichert ist, dass das Umschalten erst erfolgt, wenn das Gestänge seine Neutralstellung erreicht hat.

Einen wesentlichen weiteren Schritt der Erfindung bringt die Weiterausgestaltung gemäss Anspruch 4. Durch die Sperreinrichtung, für die mit diesem Anspruch Schutz begehrt wird, wird erzielt, dass dann, wenn das Fahrzeug sich in einer Richtung bewegt und die entgegengesetzte Fahrtrichtung vorgewählt ist, nicht mehr in der ursprünglichen Richtung beschleunigt werden kann, sondern bis zum Erreichen der Pedalneutrallage nur noch die Geschwindigkeit gleich gehalten oder verringert werden kann. Im Anspruch 5 ist eine zweckmässige Weiterausgestaltung hierzu angegeben.

In der Zeichnung ist ein Ausführungsbeispiel der Erfindung dargestellt, und zwar zeigt
Fig. 1 eine perspektivische Ansicht des Gestänges und
Fig. 2 ein Schaltschema zu der elektrischen Schaltung hierzu.

Das Pedal 1 ist an dem Pedalhebel 2 befestigt, der an der Hülse 3 befestigt ist, die auf einer Achse 4 schwenkbar gelagert ist. An der Hülse 3 ist weiterhin ein Ausleger 5 befestigt, der gelenkig mit einem doppelarmigen Hebel 6 verbunden ist, der um den Bolzen 7 schwenkbar gelagert ist, wobei dieser Bolzen 7 in dem in der Zeichnung nicht mehr dargestellten Rahmen des Fahrzeuges befestigt ist. Das zweite Ende des Hebels 6 ist gelenkig mit einem Hebel 8 verbunden, der an der Hülse 9 befestigt ist, an der weiterhin zwei Ausleger 10 und 11 befestigt sind. Die Hülse 9 ist ihrerseits wiederum auf der nicht in ihrer vollen Länge gezeichneten Achse gelagert, die ihrerseits im Rahmen des Fahrzeuges, der wie bereits erwähnt, nicht gezeigt ist, gelagert ist. Zwischen den beiden Auslegern 10 und 11 ist gelenkig ein Hebel 12 gelagert, an dessen Ende ein Pedal 13 befestigt ist. Der Hebel 12 ist mit einem Ausleger 14 versehen, an dem eine in der Zeichnung nicht mehr dargestellte, mit ihrem zweiten Ende an der Hülse 9 abgestützte Druckfeder angreift, die den Ausleger 14 und damit den Hebel 12 in Richtung auf die in der Zeichnung dargestellte Strecklage belastet, in der der Hebel 12 gegen die Unterkante des Querbalkens 15 als Anschlag anliegt, so dass eine Strecklage der Ausleger 10 und 11 einerseits und des Hebels 12 andererseits erreicht ist.

Der nur abgebrochen gezeigte Querbalken 15 erstreckt sich nach in der Zeichnung rechts bis über den Hebel 2, so dass er gegen diesen zum Anliegen kommt.

An der Hülse 3 ist ein positives Klauenkupplungsteil 16 befestigt, und an der Hülse 9 ist ein positives Klauenkupplungsteil 17 befestigt. Die Hülsen 3 und 9 sind auf der Achse 4 drehbar, aber nicht längs verschieblich gelagert. Das Schaltschiebestück 18 ist ebenfalls auf der Achse 4 drehbar, aber längsverschieblich gelagert. Das Schaltschiebestück 18 ist auf seiner in der Zeichnung rechten Seite mit einem negativen Klauenkupplungsteil 19 und auf seinem in der Zeichnung linken Seite mit einem negativen Klauenkupplungsteil 20 verbunden. Die Klauenkupplungsteile 16 und 19 können ineinander einrasten, ebenso die Klauenkupplungsteile 17 und 20. Mit dem Schaltschiebestück 18 ist ein Federdrahtbügel 21 verbunden, der an dem Hubkolben 22 eines Elektromagneten 23 befestigt ist. An dem Schaltschiebestück 18 ist weiterhin ein Hebel 24 befestigt, an dem über einen seitlichen Ausleger 25 die Schubstange 26 gelenkig angelenkt ist, die mit dem Einstellglied des Getriebes verbunden ist. Über einen weiteren Ausleger 27 ist mit dem Hebel 24 eine weitere Schubstange 28 verbunden, die mit dem Betätigungshebel 29 eines Schalters 30 verbunden ist.

Mit der Hülse 3 ist fest ein Hebel 31 verbunden, der an seiner Stirnseite eine Sperrastenverzahnung 32 aufweist, in die ein Sperrzahn 33 einrastbar ist, der mittels einer Feder 34 in die Sperrstellung drückbar ist und mittels eines Elektromagneten 35 aus der Sperrstellung gezogen werden kann.

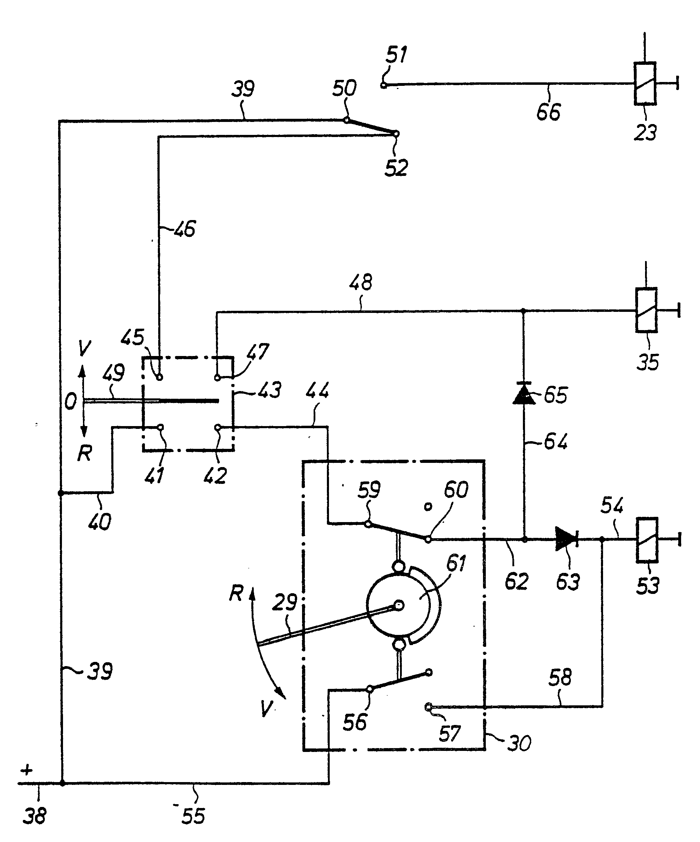

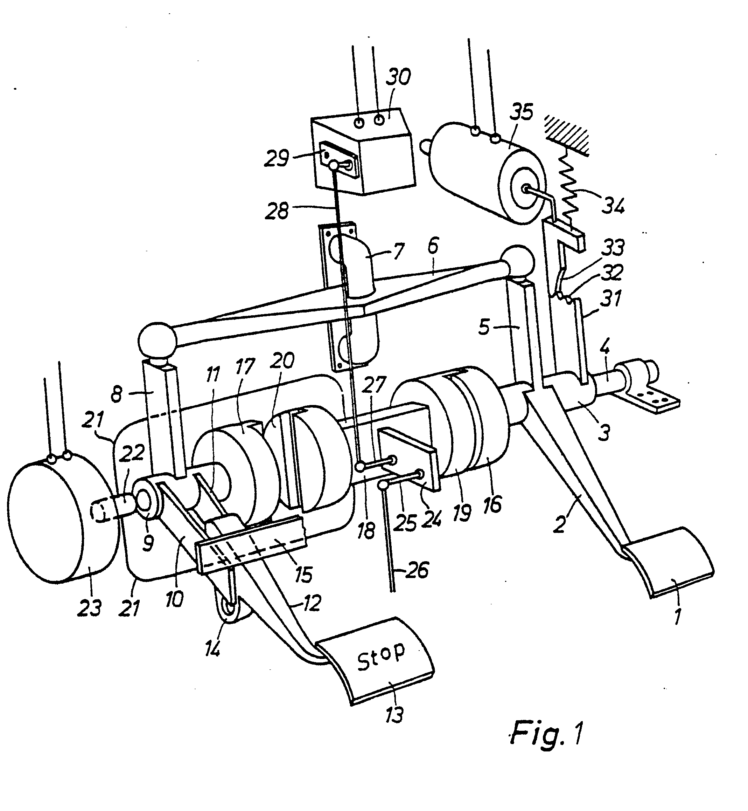

Von der Batterie kommt die Leitung 38, an der die positive Spannung liegt, während die negative Spannung an Masse liegt. Von der Leitung 38 geht einerseits eine Leitung 39 aus, von der eine Zweigleitung 40 zu dem Kontakt 41 des in Fig. 1 nicht mehr dargestellten Fahrtrichtungswahlschalters 43 führt. Ein weiterer Kontakt 42 des Wahlschalters 43 ist mit der Leitung 44 verbunden. Der Kontakt 45 des Wahlschalters 43 ist mit der Leitung 46 verbunden und der Kontakt 47 des Wahlschalters 43 ist mit der Leitung 48 verbunden. Durch willkürliche Betätigung des Hebels 49 des Wahlschalters 43 können drei Schaltzustände eingestellt werden, nämlich entweder in der Neutralstellung sind alle vier Kontakte 41, 42, 45 und 47 offen oder in der Stellung für einen Drehsinn, nämlich für Vorwärtsfahrt des Fahrzeuges, sind die Kontakte 45 und 47 miteinander verbunden und in der Schaltung für anderen Abtriebsdrehsinn des Getriebes, nämlich für Rückwärtsfahrt, sind die Kontakte 41 und 42 miteinander verbunden.

Die Leitung 39 führt weiterhin zur Basis 50 eines Schützkontaktes, durch den wahlweise die Basis 50 mit dem Kontakt 51 oder mit dem Kontakt 52 verbunden werden kann. Dieser letztere Kontakt 52 ist mit der Leitung 46 verbunden. Zu dem Schütz 50, 51, 52 gehört als Betätigungsorgan die Magnetspule 53, die an der Leitung 54 angeschlossen ist.

An die Leitung 38 ist weiterhin eine Leitung 55 angeschlossen, die zu der Kontaktbasis 56 des Schalters 30 führt. Durch Schliessen des zugeordneten Kontaktes kann die Kontaktbasis 56 mit dem Kontakt 57 verbunden werden, der an die Leitung 58 angeschlossen ist.

An die Leitung 44 ist eine Kontaktbasis 59 angeschlossen, die mit dem Kontakt 60 verbunden werden kann, an den die Leitung 62 angeschlossen ist.

Die Kontakte 56, 57 und 59, 60 werden durch eine Nockenwalze 61 betätigt, die mit dem Hebel 29 verbunden ist. In der Neutralstellung des Hebels 29 ist der Kontakt 56, 57 geöffnet und der Kontakt 59, 60 geschlossen. Ist der Hebel 29 in der Richtung verschwenkt, in der der Hebel 24 über die Schubstange 26 das Getriebe auf einen der Vorwärtsfahrt entsprechenden Drehsinn verstellt, sind beide Kontakte 56, 57 und 59, 60 geöffnet. Ist der Hebel 29 in eine Richtung verdreht, die einer Lage des Hebels 24 entspricht, in dem dieser über die Schubstange 26 das Getriebe auf den anderen, der Rückwärtsfahrt zugeordneten Drehsinn verstellt, ist der Kontakt 59, 60 und der Kontakt 56, 57 geschlossen.

Die Leitung 62 ist über eine Diode 63 an die Leitung 54 angeschlossen. Von der Leitung 62 geht eine Zweigleitung 64 aus, die über eine Diode 65 an die Leitung 48 angeschlossen ist.

Die Wirkungsweise ist folgende: In Neutrallage des Gestänges ist der Hebel 2 mit dem Pedal 1 durch eine in der Zeichnung nicht mehr dargestellte Feder bis zu einem ebenfalls in der Zeichnung nicht mehr dargestellten Anschlag hochgezogen in die Stellung, die dem Stillstand der Abtriebswelle des Getriebes entspricht. Durch eine in dem Magnet 23 angeordnete Feder ist dessen Hubkolben 22 nach in der Zeichnung rechts belastet, so dass über den Federdrahtbügel 21 das Schiebschaltstück 18 nach in der Zeichnung rechts verschoben wird, so dass die Klauenkupplungsteile 16 und 19 miteinander in Eingriff stehen. Entsprechend der Lage des Pedals 1 ist der Hebel 24 in der Lage, die der Einstellung des Getriebes auf Stillstand der Abtriebswelle entspricht, und über die Schubstange 28 ist der Hebel 29 in die beschriebene Neutrallage gebracht.

Wird jetzt der Hebel 49 des Wahlschalters in die der Vorwärtsfahrt zugeordnete Schaltstellung gebracht, in der die Kontakte 45 und 47 miteinander verbunden werden, so wird dadurch zunächst über die Leitungen 39, Kontakte 50, 52, Leitung 46, Kontakte 45, 47, Leitung 48 die Spule 35 an Spannung gelegt, so dass die Sperreinrichtung ausrastet. Mehr geschieht zunächst nicht, bis das Fahrpedal 1 durchgetreten wird und damit der Hebel 29 derart verschwenkt wird, dass der Kontakt 59, 60 öffnet und gleichzeitig über die Klauenkupplungsteile 16, 19 und den Hebel 24 in die Schubstange 26 das Getriebe in Richtung auf Vorwärtsfahrt verstellt wird. Das Fahrzeug fährt jetzt vorwärts.

Wird noch während der Vorwärtsfahrt der Wahlschalter 49 umgeschaltet auf Rückwärtsfahrt, so dass die Kontakte 41 und 42 miteinander verbunden werden während das Getriebe noch in der bisherigen Einstellung bleibt, so wird durch die Umstellung des Wahlschalters 43 die Verbindung zwischen den Kontakten 45 und 47 unterbrochen, so dass die Spule 35 nicht mehr an Spannung liegt und somit die Sperreinrichtung 31 bis 35 einrastet. Das Fahrpedal 1 mit dem Hebel 2 und damit auch der Hebel 29 kann somit nur noch entweder in der gleichen Lage gehalten oder in Richtung auf die Neutrallage bewegt werden. Bei Erreichen der Neutrallage wird über die Nockenwalze 61 eine Verbindung zwischen Basiskontakt 59 und Kontakt 60 hergestellt, so dass über die Leitungen 38, 39, 40 Kontakte 41, 42, Leitung 44, Kontakt 59, 60, Leitung 62, Diode 63 und Leitung 54 die Spule 53 an Spannung gelegt wird und damit der Kontakt zwischen 50 und 52 unterbrochen und zwischen 50 und 51 hergestellt wird. Damit wird die an den Kontakt 51 angeschlossene Leitung 66 mit der Leitung 39 verbunden und dadurch der Elektromagnet 23 an Spannung gelegt, so dass dessen Hubkolben 22 anzieht und das Schaltschiebestück 18 nach in Fig. 1 links verschiebt, so dass die Klauenkupplungsteile 17 und 20 zum Eingriff kommen.

Da infolge der Wirkung des Hebels 6 die Hülse 9 sich immer im entgegengesetzten Drehsinn dreht wie die Hülse 3 und damit auch das Klauenkupplungsteil 17 sich im entgegengesetzten Sinne dreht wie das Klauenkupplungsteil 16, wird jetzt bei Betätigung des Fahrpedals 1 das Schaltschiebestück 18 in genau entgegengesetztem Sinne verschwenkt wie in der in der Zeichnung Fig. 1 dargestellten und bisher beschriebenen Lage, so dass bei Herabtreten des Fahrpedales 1 der Hebel 24 nach oben schwenkt und damit das Getriebe über die Schubstange 26 auf Rückwärtsfahrt einstellt. Damit wird aber gleichzeitig der Hebel 29 verschwenkt, derart, dass über die Nockenwalze 61 der Kontakt 56, 57 geschlossen und der Kontakt 59, 60 geschlossen wird. Dadurch wird über die Leitungen 38, 55, Kontakte 56, 57, Leitung 58 und 54 die Spule 53 an Spannung gelegt und somit in der beschriebenen Weise bewirkt, dass der Hubmagnet 23 weiterhin an Spannung bleibt. Weiterhin wird über die Leitungen 39, 40, Kontakte 41, 42, Leitung 44, Kontakte 59, 60, Diode 63 ebenfalls die Leitung 54 an Spannung gelegt, gleichzeitig aber auch die Zweigleitung 64 an Spannung gelegt, so dass über diese der Magnet 35 an Spannung gelegt wird und damit die Sperreinrichtung 31 bis 35 wieder ausrastet. Das Fahrzeug kann jetzt also beliebig rückwärts gefahren werden.

Wird während der Rückwärtsfahrt der Hebel 49 des Wahlschalters 43 wieder umgeschaltet, derart, dass die Verbindung zwischen den Kontakten 41 und 42 unterbrochen und zwischen den Kontakten 45 und 47 hergestellt wird, so bleibt zunächst die Spule 53 über die Kontakte 56, 57 an Spannung. Das heisst, das Fahrzeug fährt weiterhin rückwärts, wobei jedoch ein Verstellen des Getriebes auf höhere Fahrgeschwindigkeit infolge des Wirkens der Sperreinrichtung 31 bis 35 nicht möglich ist. Erst wenn das Pedal 1 in die Neutralstellung gebracht worden ist und damit auch der Hebel 29 die Neutralstellung erreicht hat, liegt die Spule 53 nicht mehr an Spannung, weil einerseits die Kontakte 56 und 57 nicht mehr miteinander verbunden sind und andererseits die Kontakte 41 und 42 miteinander nicht mehr verbunden sind. Das Schütz 51 und 53 schaltet deshalb wieder um, so dass der Basiskontakt 50 mit dem Kontakt 52 verbunden ist und das Fahrzeug wieder auf Vorwärtsfahrt vorbereitet ist.

Ist das Pedal 1 durch Treten auf dieses Pedal aus der Neutralstellung herausgebracht und wird der Fuss von dem Pedal 1 genommen und auf das Pedal 13 gesetzt und dieses getreten, so wird infolge der Verbindung über den Hebel 6 nun durch das Pedal 13 über den Hebel 12, die Ausleger 10, 11, die Hülse 9 und den Hebel 8, den Hebel 6 und den Hebel 5 das Pedal 1 in Richtung auf die Neutralstellung bewegt. Zusätzlich ist der Ausleger 14 des Pedalhebels 12 mit einer Reibungsbremse derart verbunden, dass dann, wenn mit grosser Kraft auf das Pedal 13 getreten wird, insbesondere wenn der Anschlag 15 auf den Hebel 2 zum Anliegen gekommen ist, der Hebel 12 sich gegenüber den Auslegern 10 und 11 um das Gelenk zwischen diesen Teilen abknickt und dadurch über den Ausleger 14 die Reibungsbremse betätigt.

Die Ausgestaltung der Verbindungen des Schaltschieberstückes 18 mit den beiden zu gegenläufiger Bewegung gekoppelten Teilen 3 und 9 als Klauenkupplungen 16/19 bzw. 17/20 bildet eine weitere, mechanische Sperre, die sichert, dass die Umschaltung der Zuordnung der Bewegung des Pedales 1 zu der Einstellung des Getriebes nur in dessen Neutrallage erfolgen kann. Somit ist eine doppelte Sicherung vorhanden: die Ausgestaltung der elektrischen Schaltung sichert, dass der Magnet 23 nur dann umschaltet, wenn der das Getriebe steuernde Hebel 24 die Neutrallage erreicht hat und selbst dann, wenn der Magnet 23 das Schieberschaltstück 18 in die jeweils andere Position zieht, obwohl die Teile 3 und 9 noch nicht genau in Neutrallage sind, die Klauenkupplungsteile mit ihren Stirnflächen voreinander bleiben, bis die Umschalt-Soll-Lage erreicht ist.

Die Sperreinrichtung 31–35 sichert, dass ein Fahrer, der den Handumschalter betätigt hat, nicht in der Annahme, das Getriebe habe bereits umgeschaltet und er könne in der am Handschalter gewählten Richtung beschleunigen, das Fahrpedal 1 durchtreten kann, wenn tatsächlich das Getriebe noch gar nicht auf die am Handwahlhebel eingestellte Richtung eingestellt ist.

Bei der Pedalsteuerung ist unabhängig davon, welche Fahrtrichtung gewählt wurde, stets eine eindeutige Zuordnung der Lage des Fahrpedals 1 zu der Lage der Schubstange 26 und damit des Einstellorganes des Getriebes gegeben. Diese Tatsache ermöglicht, die Vorteile von zwangsläufig übertragenden, insbesondere hydrostatischen Getrieben voll auszunutzen: Das im Getriebe eingestellte Übersetzungsverhältnis ist stets eindeutig durch die Lage des Fahrpedales bestimmt. Bei durch eine Brennkraftmaschine angetriebenen Fahrzeugen kann auch eine gleichzeitige Steuerung des Getriebes und der Brennkraftmaschine durch ein kraftschlüssig von einem der Hebel 2 oder 10, 11 bzw. 12 gesteuertes, mit dem Einstellorgan der Brennkraftmaschine verbundenes Glied, wie durch DE-PS 1 526 528 bekannt, verwendet werden.

Der Hebel 2 ist durch eine in der Zeichnung nicht mehr dargestellte Feder in Richtung nach oben, also in Richtung zur Einstellung des Getriebes jeweils auf Neutrallage belastet oder der Hebel 5 ist durch eine solche Feder in der entsprechenden Richtung belastet.

**Patentansprüche**

1. Pedalsteuerung mit einem Pedal (1) für ein stufenlos über eine Nullage, die dem Stillstand der Abtriebswelle zugeordnet ist, in beide Abtriebsdrehrichtungen verstellbares, vorzugsweise hydrostatisches Getriebe eines Fahrzeuges, wobei das Pedal (1) mittels einer Umsteuervorrichtung (18, 23, 43) derart mit dem Einstellglied des Getriebes verbunden ist, dass in der einen Lage der Umsteuervorrichtung (18, 23, 43) der Weg des Pedales zwischen dessen beiden Endlagen der Einstellung des Getriebes vom Stillstand bis zur maximalen Drehzahl in der einen Drehrichtung zugeordnet ist und in der anderen Lage der Umsteuervorrichtung (18, 23, 43) der anderen Drehrichtung der Getriebeabtriebswelle zugeordnet ist, wobei die Umsteuervorrichtung (18, 23, 43) einen Betätigungshebel (49) aufweist und wobei Teile (3, 9) zu gegenläufiger Bewegung miteinander gekuppelt sind, von denen eines (3) mit dem Pedal (1) verbunden ist, und wobei die Umsteuervorrichtung (18, 23, 43) ein Schaltstück (18) umfasst, das wahlweise mit einem von beiden zu gegenläufigen Bewegung gekuppelten Teilen (3, 9) verbindbar ist und mit dem Einstellglied des Getriebes verbunden ist, dadurch gekennzeichnet, dass das Schaltstück (18) mittels eines Elektromagneten (23) schaltbar ist, der mittels eines mit dem Betätigungshebel (49) versehenen Wahlschalters (43), vorzugsweise eines Handschalters, einschaltbar ist und dass in der Schaltung ein weiterer, von der Lage eines mit dem Einstellglied des Getriebes verbundenen Hebels (24) abhängig ein Umschalten des Elektromagneten (23) nur bei Neutrallage des Hebels (24) zulassender Schalter (30) vorgesehen ist.

2. Pedalsteuerung nach Anspruch 1, dadurch gekennzeichnet, dass die beiden zu gegenläufiger Bewegung gekuppelten Teile (3 und 9) und das Schaltstück (18) koaxial zueinander angeordnet sind und an den einander gegenüberliegenden Stirnseiten mit Klauenkupplungsteilen (16 und 19 bzw. 17 und 20) versehen sind.

3. Pedalsteuerung nach Anspruch 1, dadurch gekennzeichnet, dass der weitere Schalter (30) zwei Kontakte (56, 57 und 59, 60), vorzugsweise Mikroschalter betätigt, die bei Einstellung des Getriebes in einem Drehsinn (Vorwärtsfahrt) beide geöffnet sind, in Neutralstellung des Hebels (24) einer (56, 57) geöffnet und einer (59, 60) geschlossen ist und bei Einstellung des Getriebes im anderen Drehsinn (Rückwärtsfahrt) beide geschlossen sind, wobei beide Kontakte (56, 57 und 59, 60) zu dem Elektromagneten (23) führen, der das Schaltstück (18) in die dem anderen Drehsinn (Rückwärtsfahrt) zugeordnete Lage zieht, wobei das Schaltstück (18) durch eine Feder belastet ist, die es in die dem einen Drehsinn (Vorwärtsfahrt) zugeordnete Lage zieht.

4. Pedalsteuerung nach einem der vorangegangenen Ansprüche, gekennzeichnet durch eine ein weiteres Durchtreten des Pedales (1) verhindernde Sperreinrichtung (31 bis 35), die selbsttätig einrastet, wenn der mit dem Einstellglied des Getriebes verbundene Hebel (24) in einer einem anderen Drehsinn wie der dem Betätigungshebel (49) des Wahlschalters (43) gegebenen Lage zugeordnete Drehsinn zugeordneten Lage liegt.

5. Pedalsteuerung nach Anspruch 4, dadurch gekennzeichnet, dass die Sperreinrichtung durch eine Feder (34) in Richtung Sperrstellung belastet ist und mittels eines Elektromagneten (35) abhebbar ist, wobei der Elektromagnet an Spannung liegt, wenn der der Lage des Betätigungshebels (49) des Wahlschalters (43) zugeordnete Drehsinn der gleiche ist wie der Drehsinn, der der Lage des mit dem Einstellglied des Getriebes verbundenen Hebels (24) zugeordnet ist.

**Claims**

1. A pedal control unit comprising a pedal (1) for a preferably hydrostatic transmission, which is continuously adjustable through a neutral position assigned to a stationary condition of the driven shaft in both directions of rotation, wherein the pedal (1) is connected by means of a reversing device (18, 23, 43) to the adjusting element of the transmission in such manner that, when the reversing device (18, 23, 43) is in one position the path of the pedal between its two end positions is assigned to the setting of the transmission from a stationary state to a maximum speed in one direction of rotation, and when the reversing device (18, 23, 43) is in the other position it is assigned to the other direction of rotation of the transmission driven shaft, wherein the reversing device (18, 23, 43) possesses an actuating lever (49) and wherein components (3, 9) for counter-rotating movement are coupled to one another, one of which (3) is connected to the pedal (1), and wherein the reversing device (18, 23, 43) comprises a switching component (18) which can be selectively connected to one of the two components (3, 9) which are coupled for counter-rotating motion and which is connected to the adjusting element of the transmission, characterised in that the switching component (18) can be switched by means of an electro-magnet (23) which can be switched on by means of a selector switch (43), preferably a manual switch, which is provided with the actuating lever (49), and that the circuit contains a further switch (30) which, in dependence upon the position of a lever (24) which is connected to the adjusting element of the transmission, allows the electro-magnet (23) to switch over only when the lever (24) is in the neutral position.

2. A pedal control unit as claimed in claim 1, characterised in that the two components (3 and 9) which are coupled for counter-rotating motion and the switching component (18) are arranged mutually coaxially, and provided at opposite sides with clutch coupling components (16 and 19, 17 and 20).

3. A pedal control unit as claimed in claim 1, characterised in that the further switch (30) actuates two contacts (56, 57 and 59, 60), preferably micro-switches, which are both open when the transmission is set in one direction of rotation (forwards movement), of which one is open (56, 57) and the other closed (59, 60) when the lever (24) is in the neutral position, and which are both closed when the transmission is set in the other direction of rotation (backwards movement), wherein the two contacts (56, 57 and 59, 60) lead to the electro-magnet (23) which draws the switching component (18) into the position assigned to the other direction of rotation (backwards movement), wherein the switching component (18) is loaded by a spring by which it is drawn into the position assigned to the one direction of rotation (forwards movement).

4. A pedal control unit as claimed in any preceding claim, characterised in that a blocking device (31 to 35) prevents further movement of the pedal (1) and locks automatically when the lever (24) which is connected to the adjusting element of the transmission lies in a position assigned to a different direction of rotation to that assigned to the position occupied by the actuating lever (49) of the selector switch (43).

5. A pedal control unit as claimed in claim 4, characterised in that the blocking device is loaded by a spring (34) in the direction of the blocking position and can be lifted by means of an electro-magnet (35), wherein the electro-magnet is energised when the direction of rotation assigned to the position of the actuating lever (49) of the selector switch (43) is the same as the direction of rotation assigned to the position of the lever (24) which is connected to the adjusting element of the transmission.

**Revendications**

1. Commande par pédale (1) pour un mécanisme, notamment une boîte de vitesses hydrostatique d'un véhicule automobile, réglable sans gradins, à partir d'une position neutre correspondant à l'état d'arrêt de l'arbre de sortie du mécanisme, dans les deux sens de rotation de l'arbre, auquel cas la pédale (1) est reliée, au moyen d'un dispositif de commutation (18, 23, 43) avec l'organe de réglage de position du mécanisme, d'une manière telle que, dans l'une des positions du dispositif de commutation, la course de la pédale entre ses deux positions extrêmes corresponde au réglage de position du mécanisme à partir de l'état d'arrêt jusqu'à la vitesse de rotation maximale dans l'un des sens de rotation, et que l'autre position du dispositif de commutation corresponde à une rotation de l'arbre de sortie du mécanisme dans l'autre sens, auquel cas le dispositif de commutation présente un levier d'actionnement (49) et des éléments (3, 9) accouplés entre eux à rotation en sens opposés, dont l'un (3) est relié à la pédale (1), et comprend également une pièce de connexion (18) qui peut être reliée, au choix, avec l'un des deux éléments (3, 9) accouplés à rotation en sens opposés, et est reliée avec l'organe de réglage du mécanisme, commande caractérisée en ce que la pièce de connexion (18) est déplaçable au moyen d'un électro-aimant (23) qui peut être mis en circuit au moyen d'un contacteur de sélection (43) relié au levier d'actionnement (49), notamment un contacteur manuel, le montage de connexion comprenant un autre contacteur (30) qui provoque, en dépendance de la position d'un levier (24) relié à l'organe de réglage du mécanisme, une commutation de l'électro-aimant (23), seulement pour une position neutre du premier levier (24).

2. Commande par pédale suivant la revendication 1, caractérisé en ce que les deux éléments (3 et 9) accouplés pour déplacement l'un par rapport à l'autre et la pièce de connexion (18) sont disposés coaxialement, et sont pourvus sur leur face frontale opposée entre-elles, de pièces d'accouplement à griffes (16 et 19 ainsi que 17 et 20).

3. Commande par pédale selon la revendication 1, caractérisé en ce que l'autre contacteur (30) actionne deux contacts (56, 57 et 59, 60) notamment des micro-interrupteurs, qui, lors d'un réglage du mécanisme sur l'un des sens de rotation (marche avant), sont tous les deux ouverts, tandis que, en position neutre du levier (24), l'un (56, 57) est ouvert et l'autre (59, 60) est fermé, et que, lors d'un réglage du mécanisme sur l'autre sens de rotation (marche arrière), les deux contacts sont fermés, ces deux contacts (56, 57, et 59, 60) conduisant à l'électro-aimant (23) lequel déplace la pièce de connexion (18) dans la position correspondant à l'autre sens de rotation (marche arrière), cette pièce de connexion étant chargée par un ressort qui la fixe dans la position affectée à l'un des sens de rotation (marche avant).

4. Commande par pédale suivant l'une quelconque des revendications 1 à 3, caractérisée par un dispositif de blocage (31 à 35) s'opposant à un nouvel enfoncement de la pédale (1), dispositif qui est engagé automatiquement lorsque le levier (24) relié à l'organe de réglage du mécanisme se trouve dans une position affectée à un autre sens de rotation que celui affecté à la position actuelle du levier d'actionnement (49) du contacteur de sélection (43).

5. Commande par pédale suivant la revendication 4, caractérisé en ce que le dispositif de blocage est chargé par un ressort (34) en direction de la position de blocage, et peut être libéré au moyen d'un électro-aimant (35) lequel est placé sous tension lorsque le sens de rotation affecté à la position du levier d'actionnement (49) du contacteur de sélection (43), est le même que le sens de rotation affecté à la position du levier (24) qui est relié à l'organe de réglage du mécanisme.

0 004 916

Fig. 1